# EUROPEAN PATENT SPECIFICATION

(11) **EP 2 822 056 B1**
(45) Date of publication and mention of the grant of the patent: **14.09.2016**
(21) Application number: 13191048.1
(22) Date of filing: 31.10.2013
(51) Int. Cl.: H01M 2/02

(54) **Secondary Battery**
Sekundärbatterie
Batterie secondaire

(30) Priority: 05.07.2013 US 201361843305 P; 21.10.2013 US 201314059434
(43) Date of publication of application: 07.01.2015
(73) Proprietor: Samsung SDI Co., Ltd., Yongin-si, Gyeonggi-do (KR)
(72) Inventor: Seong, Jaeil, Yongin-si, Gyeonggi-do (KR); Yoshio, Hideaki, Yongin-si, Gyeonggi-do (KR); Yun, Jiwon, Yongin-si, Gyeonggi-do (KR)
(74) Representative: Taor, Simon Edward William

(56) References cited:
- EP-A1- 2 273 584
- EP-A1- 2 551 935
- US-A1- 2011 123 854

## Description

Embodiments relate to a secondary battery.

A voltage surge may occur to a secondary battery due to, e.g., a short circuit internal or external to the electrode assembly, overcharge, or overdischarge. Excessive heat generated due to the voltage surge may cause an accident, e.g., fire or explosion. Therefore, it is very important to test the safety of the secondary battery.

In safety tests on secondary batteries, the secondary batteries are tested for fires and explosions under electrical conditions, e.g., cell short-circuiting, abnormal charging, overcharging and forced discharging, and under physical conditions, e.g., vibration and shock. Particularly, in a longitudinal compression test of a secondary battery, pressure may be abruptly applied from the outside to two opposing sides of the battery can, and the safety of the battery relative to the deformation is examined. When a secondary battery is longitudinally compressed, a short circuit between an active material of a positive electrode plate and an active material of a negative electrode plate may occur due to deformation of the electrode assembly, resulting in ignition and explosion of the secondary battery.

It is a feature of an embodiment to provide a secondary battery, which can improve the safety by allowing a can to be deformed in a predetermined manner during a longitudinal compression test.
US2011123854 discloses a case for secondary battery and a lithium secondary battery including the case, the case including: opposing main walls; opposing side walls connected to the main walls; and a bottom wall connected ends of the main and side walls. The bottom wall has a first notch extending between the main walls. The thickness of the bottom wall decreases from the side walls to a central portion thereof.
EP2273584 discloses a lithium ion battery. The lithium ion battery includes a can, an electrode assembly, and a cap assembly. An emergency rupture member is formed on a bottom surface of the can. The emergency rupture member is provided with a thickness smaller than the thickness of the bottom of the can.
EP2551935 discloses a rechargeable battery that includes a case, an electrode assembly in the case and a cap plate closing the case, wherein the case comprises a first region disposed in a centre portion of the case and second regions on either side of the first region, wherein the radius of curvature of the internal curved surfaces connecting the bottom of the case to the front or rear walls of the case is greater in the second regions than in the first region of the case.

According to an aspect of the invention, there is provided a secondary battery as set out in claim 1. Preferred features are set out in claims 2 to 7.

The corner portion may include an inner corner formed on an inner surface of the can and an outer corner formed on an outer surface of the can. The deformed part may include a groove formed from the inner corner to the bottom surface. In addition, the deformed part include a curved portion formed such that the outer corner is recessed toward the inner corner. In addition, the deformed part may include a groove formed from the inner corner to the bottom surface and a curved portion formed such that the outer corner is recessed toward the inner corner.

In the secondary battery according to some embodiments of the present invention, a deformed part may be formed at the center of a corner portion of a can, where long side surfaces and a bottom surface meet, thereby allowing the can to be deformed in a predetermined direction during a longitudinal compression test. Accordingly, the secondary battery according to such embodiments of the present invention can control a short circuit of the electrode assembly, thereby improving the safety of the secondary battery.
FIG. 1 is a perspective view of a secondary battery according to an embodiment of the present invention;
FIG. 2 is an exploded perspective view of the secondary battery shown in FIG. 1;
FIG. 3a is a sectional view taken along line I - I ' of FIG. 1 and FIG. 3b is a sectional view taken along line II - II' of FIG. 1;
FIG. 4 is a perspective view of a secondary battery according to another embodiment of the present invention;
FIG. 5 is a sectional view taken along line III-III" of FIG. 4;
FIG. 6 is a sectional view illustrating a deformed part according to still another embodiment; and
FIG. 7 is a plan view illustrating a state in which the secondary battery shown in FIG. 1 is longitudinally compressed.

Example embodiments of the present invention will now be described in more detail with reference to accompanying drawings, such that those skilled in the art can easily practice the present invention.

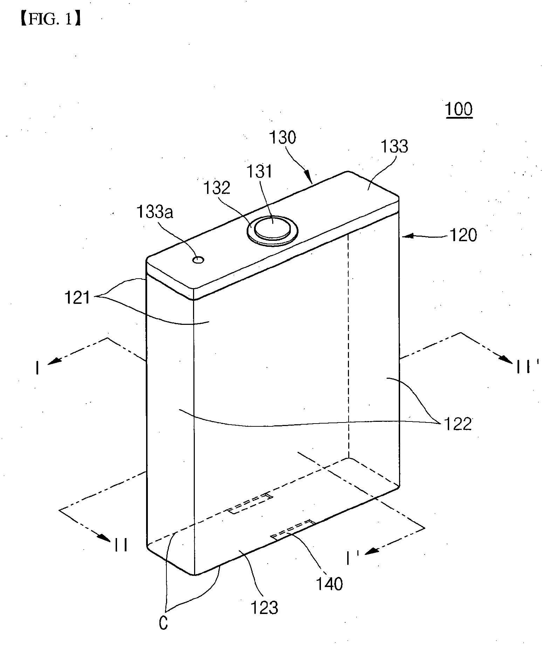

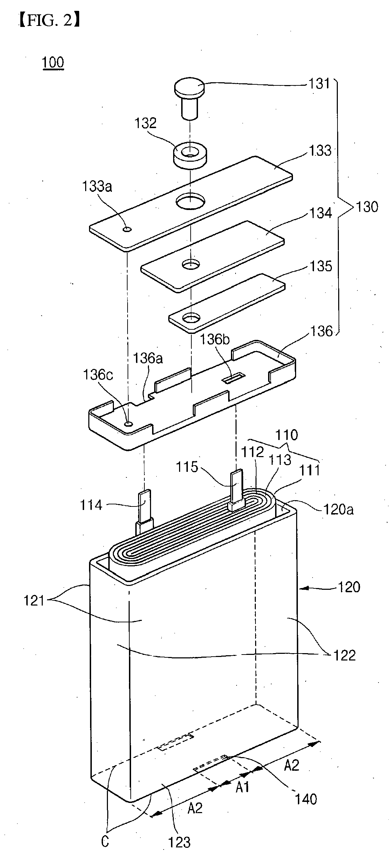

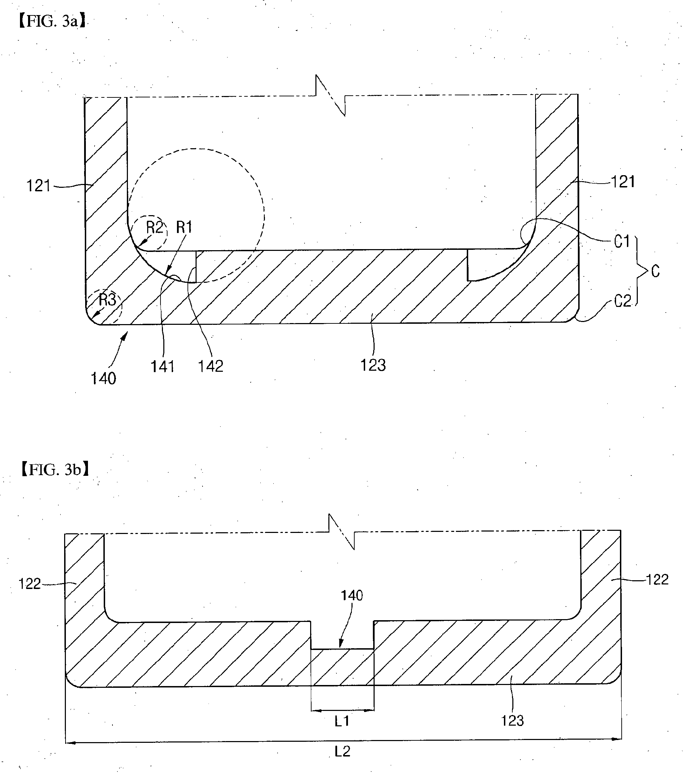

FIG. 1 is a perspective view of a secondary battery according to an embodiment of the present invention, FIG. 2 is an exploded perspective view of the secondary battery shown in FIG. 1 and FIG. 3a is a sectional view taken along line I - I 'of FIG. 1 and FIG. 3b is a sectional view taken along line II - II" of FIG. 1.

Referring to FIGS. 1 and 2, the secondary battery according to an embodiment of the present invention includes an electrode assembly 110, a can 120, a cap assembly 130 and a deformed part 140. In this embodiment, the deformed part 140 provides a notched region.

The electrode assembly 110 includes a positive electrode plate 111 having a positive electrode collector coated with a positive electrode active material, a negative electrode plate 112 having a negative electrode collector coated with a negative electrode active material, and a separator 113 interposed between the positive electrode plate 111 and the negative electrode plate 112 to electrically insulate the positive and negative electrode plates 111 and 112. The electrode assembly 110 is formed by winding the positive electrode plate 111, the negative electrode plate 112 and the separator 113 in a jelly roll configuration. Here, the positive electrode plate 111 may be formed of an aluminum (Al) foil, the negative electrode plate 112 may be formed of a copper (Cu) foil, and the separator 113 may be formed of polyethylene (PE) or polypropylene (PP), but embodiments of the present invention are not limited in regard of the materials of the positive and negative electrode plates 111 and 112 and the separator 113 to those listed herein. In addition, a positive electrode tab 114 is connected to the positive electrode plate 111 to protrude upward from a top portion of the electrode assembly 110, and a negative electrode tab 115 is connected to the negative electrode plate 112 to protrude upward from the top portion of the electrode assembly 110.

The can 120 may have an approximately hexahedron shape provided with an opening 120a through which the electrode assembly 110 is accommodated. In detail, the can 120 in this embodiment includes a pair of long side surfaces 121 facing each other and having relatively large areas, a pair of short side surfaces 122 facing each other and having relatively small areas, and a bottom surface 123 connecting the pair of long side surfaces 121 and the pair of short side surfaces 122. Here, a portion of the can 120, where the pair of long side surfaces 121 and the bottom surface 123 meet, is defined as a corner portion C. The corner portion C includes a centrally positioned first region A1 and a second region A2 positioned at its edge. The deformed part 140 (i.e. notched region) is formed in the first region A1. The corner portion C will later be described in detail. In some embodiments, the corner region comprises an inner corner region on an inner surface of the can 120 and an outer corner region on an outer surface of the can 120.

In addition, the can 120 is formed by a deep drawing method. Therefore, the pair of long side surfaces 121, the pair of short side surfaces 122, and the bottom surface 123 are integrally formed. As shown in FIGS. 3a and 3b, the bottom surface 123 of the can 120 may be formed more thickly than the long side surface121 and the short side surface 122. In addition, the can 120 is made of aluminum or an aluminum alloy, which is light in weight and ductile. In addition, the inner surface of the case 120 may be treated to be insulated from the electrode assembly 110.

The cap assembly 130 is coupled to the opening 120a of the can 120. The cap assembly 130 includes an electrode terminal 131, a gasket 132, a cap plate 133, an insulating plate 134, a terminal plate 135 and an insulation case 136.

The gasket 132 is placed between the electrode terminal 131 and the cap plate 133, and the electrode terminal 131 and the terminal plate 135 are electrically connected to each other. The insulating plate 134 insulates the cap plate 133 from the terminal plate 135. An electrolyte injection hole 133a is formed at one side of the cap plate 133. In order to seal the electrolyte injection hole 133a after an electrolytic solution is inserted into the electrolyte injection hole 133a, a plug (not shown) is installed. A safety vent (not shown) configured to be opened to release internal gas when the internal pressure of the can 120 exceeds a preset pressure may be formed at the other side of the cap plate 133. The insulation case 136, which is formed in the opening 120a of the can 120, seals the can 120. The insulation case 136 may be made of a polymer resin having an insulating property, e.g., polypropylene (PP). Holes 136a and 136b are formed in the insulation case 136 to be located to correspond to the positive electrode tab 114 and the negative electrode tab 115 to allow the positive electrode tab 114 and the negative electrode tab 115 to pass through the holes 136a and 136b. In addition, an electrolyte passing hole 136c is formed in the insulation case 136 to be located to correspond to the electrolyte injection hole 133a.

In this embodiment, the deformed part 140 (i.e. the notched region) is formed at the center of the corner portion C of the can 120 to allow the can 120 to be deformed in a predetermined direction during a longitudinal compression test. That is to say, since a longitudinal axis of the long side surface121 formed along the deformed part 140 serves as the central axis during the longitudinal compression test, the can 120 may be deformed by the deformed part 140 in a predetermined direction.

In a longitudinal compression test of a secondary battery, pressure may be applied from the pair of short side surfaces 122 of the can 120 towards the center, and the safety of the secondary battery 100 is examined. In other words, in a longitudinal compression test, pressure is applied to the pair of short side surfaces 122 of the can 120.

Since the deformed part 140 is formed at a central portion of opposite sides of the corner portion C, where the pair of long side surfaces 121 and the bottom surface 123 meet, a position of the central axis, at which the can 120 is deformed during the longitudinal compression test, can be more securely defined.

As a result, the can 120 may be deformed in opposite directions in view of the central axis. That is to say, in FIG. 2, the can 120 may be deformed so as to allow the long side surfaces 121 positioned on the front surface or the long side surfaces 121 positioned on the rear surface to get closer to each other. As described above, a short circuit of the electrode assembly 110 is controlled by allowing the can 120 to be deformed in a predetermined direction during the longitudinal compression test, thereby improving the safety of the secondary battery 100.

Referring to FIGS. 3a and 3b, the deformed part 140 is formed in the first region A1 of the corner portion C of the can 120. The corner portion C may include an inner corner C1 formed on the inner surface of the can 120 and an outer corner C2 formed on the outer surface of the can 120. The deformed part 140 is formed by forming a groove 141 from the inner corner C1 to the bottom surface 123. Therefore, a thickness of the deformed part 140 is smaller than that of a region around the deformed part 140. In addition, a stepped surface 142 is formed at a portion where the deformed part 140 and the bottom surface 123 meet. Here, a thickness of the bottom surface 123 may be approximately 0.5 mm, and a thickness of the deformed part 140 having the stepped surface 142 may be approximately 0.4 mm. If the thickness of the deformed part 140 exceeds 0.4 mm, there is no significant difference between the thicknesses of the deformed part 140 and the bottom surface 123. Therefore, during the longitudinal compression test, it is not possible to cause the can 120 to be deformed in a predetermined direction in view of the deformed part 140. In addition, if the thickness of the deformed part 140 is smaller than 0.4 mm, the can 120. may be easily deformed due to a minor external shock. Therefore, to avoid this, the thickness of the deformed part 140 can be approximately 80% of the thickness of the bottom surface 123. In some embodiments, the thickness of the deformed part 140 is from 65% to 95% of the thickness of the bottom side 123.

In addition, in this embodiment, an inner radius curvature R1 of the deformed part 140 is made to be greater than an inner radius curvature R2 of the second region A2 of the corner portion C (R1>R2). In addition, the inner radius curvature R1 of the deformed part 140 s made to be greater than an outer radius curvature R3 of the deformed part 140 (R1>R3). Here, the inner radius curvature R2 of the second region A2 is equal to the outer radius curvature R3 of the deformed part 140 (R2=R3). That is to say, the deformed part 140 is formed such that the inner radius curvature R1 and the outer radius curvature R3 are different from each other and the inner radius curvature R1 is greater than the outer radius curvature R3.

Hence, in this embodiment, the notched region (deformed part 140) is formed in the inner corner region as a groove extending from an inner surface of one of the long side surfaces 121 into the bottom side 123, with the groove extending from the inner surface of the long side surface 121 into the bottom side 123 to a stepped portion in the bottom side 123.

In such embodiments, the thickness of the groove in the bottom side 123 can be from 65% to 95% of the thickness of the bottom side 123. In some embodiments, the thickness of the groove in the bottom side 123 is 80% of the thickness of the bottom side 123.

In addition, in this embodiment, a length L1 of the first region A1 having the deformed part 140 may be approximately 1% to 35%, in some embodiments approximately 15%, of an overall length L2 of the bottom surface 123. For example, if the overall length L2 of the bottom surface 123 is 51 mm, the deformed part 140 may be formed approximately 1 mm to 18 mm, in some embodiments approximately 8 mm. Here, in some embodiments, if the length of the deformed part 140 is less than 1% of the overall length L2 of the bottom surface 123, it is not such as to deform the can 120 with respect to the deformed part 140 during the longitudinal compression test. Therefore, the can 120 may not be deformed in a predetermined direction. In addition, if the length of the deformed part 140 exceeds 35% of the overall length L2 of the bottom surface 123, in some embodiments the can 120 may be deformed in many directions in the deformed part 140 during the longitudinal compression test. Accordingly, it may not be possible to allow the can 120 to be deformed in a predetermined direction.

As described above, the secondary battery 100 according to this embodiment of the present invention includes the deformed part 140 having its inner radius curvature R1 greater than its outer radius curvature R3 formed at the center of the corner portion C, where the long side surfaces 121 and the bottom surface 123 of the can 120 meet, thereby allowing the can 120 to be deformed in the predetermined direction during the longitudinal compression test. Accordingly, the secondary battery 100 according to this embodiment of the present invention can control a short circuit of the electrode assembly 110, thereby improving the safety of the secondary battery 100.

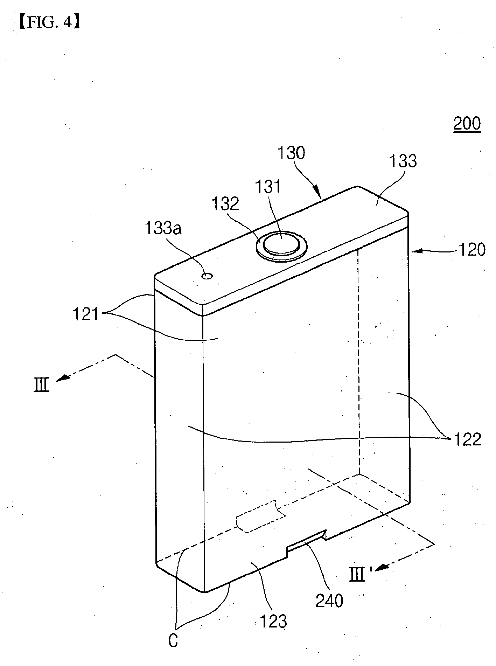

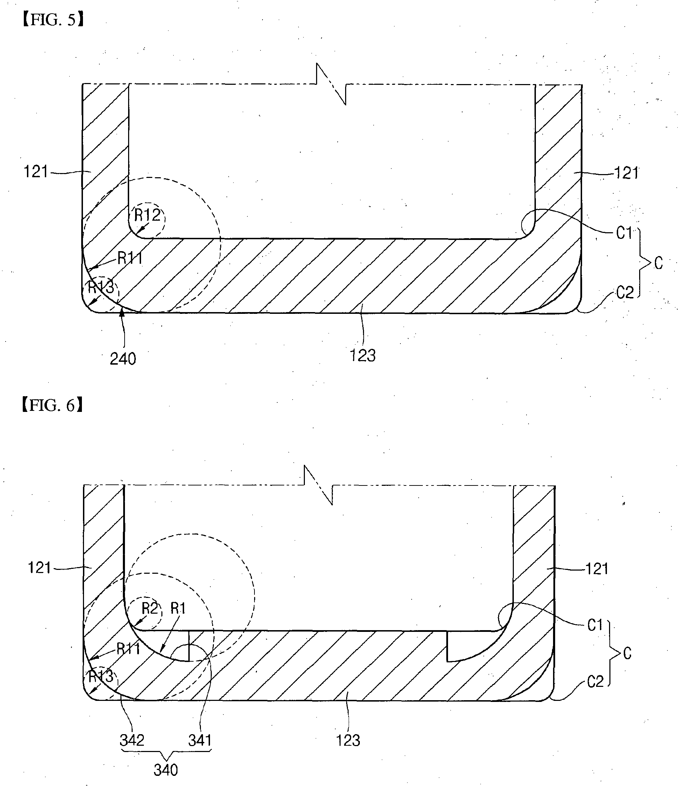

FIG. 4 is a perspective view of a secondary battery according to another embodiment of the present invention and FIG. 5 is a sectional view taken along line III - III' of FIG. 4.

The secondary battery 200 shown in FIG. 4 is substantially the same as the secondary battery 100 shown in FIG. 1, except for a configuration of a deformed part 140. Thus, the following description will focus on the deformed part 240 shown in FIG. 4.

Referring to FIGS 4 and 5, the secondary battery 200 according to this embodiment of the present invention includes an electrode assembly 110, a can 120, a cap assembly 130 and the deformed part 240.

The deformed part 240 is formed in a first region A1 of a corner portion C of the can 120. The corner portion C includes an inner corner C1 formed on an inner surface of the can 120 and an outer corner C2 formed on an outer surface of the can 120. The deformed part 240 is formed by forming a curved portion such that the outer corner C2 is recessed toward the inner corner C1. In addition, when viewed from the outside of the can 120, the deformed part 240 is formed to be recessed into the inside of the can 120. Therefore, the thickness of the deformed part 240 is smaller than that of a portion around the deformed part 240.

In addition, an outer radius curvature R11 of the deformed part 240 is made to be greater than an outer radius curvature R13 of the second region A2 of the corner portion C (R11>R13). In addition, the outer radius curvature R11 of the deformed part 240 is made to be greater than an inner radius curvature R12 of the deformed part 240 (R11>R12). Here, the outer radius curvature R13 of the second region A2 is equal to the inner radius curvature R12 of the deformed part 240 (R13=R12). That is to say, the deformed part 240 is formed such that the inner radius curvature R12 and the outer radius curvature R11 are different from each other, and the outer radius curvature R11 is greater than the inner radius curvature R12.

Hence, in this embodiment, the notched region (deformed part 240) is formed in the outer corner region as a groove extending from an outer surface of one of the long side surfaces 121 to an outer surface of the bottom side 123

As described above, the secondary battery 200 according to this embodiment of the present invention includes the deformed part 240 having its outer radius curvature R11 greater than its inner radius curvature R12 formed at the center of the corner portion C, where the long side surfaces 121 and the bottom surface 123 of the can 120 meet, thereby allowing the can 120 to be deformed in the predetermined direction during the longitudinal compression test. Accordingly, the secondary battery 200 according to this embodiment of the present invention can control a short circuit of the electrode assembly 110, thereby improving the safety of the secondary battery 200.

FIG. 6 is a sectional view illustrating a deformed part according to still another embodiment. Here, the sectional view of FIG. 6 illustrates a part corresponding to the sectional view of FIG. 5.

Referring to FIG. 6, the deformed part 340 is formed in a first region A1 of the corner portion C of the can 120. The corner portion C includes an inner corner C1 formed on an inner surface of the can 120 and an outer corner C2 formed on an outer surface of the can 120. In detail, the deformed part 340 includes a groove 341 from the inner corner C1 to a bottom surface 123 and a curved portion 342 recessed from the outer corner C2 toward the inner corner C1. That is to say, the deformed part 340 is a combination of the deformed part 140 shown in FIG. 3a and the deformed part 240 shown in FIG. 5.

An inner radius curvature R1 of the deformed part 340 is made to be greater than an inner radius curvature R2 of the second region A2 of the corner portion C (R1>R2). In addition, an outer radius curvature R11 of the deformed part 340 is made to be greater than an outer radius curvature R13 of a second region A2 of the corner portion C (R11>R13). Here, the inner radius curvature R1 of the deformed part 340 is equal to the outer radius curvature R11 of the deformed part 340 (R1=R11), and the inner radius curvature R2 of the second region A2 is equal to the outer radius curvature R13 of the second region A2 (R2=R13). That is to say, the deformed part 340 is formed such that the inner radius curvature R1 is equal to the outer radius curvature R11 and the inner/outer radius curvatures R1 and R11 of the deformed part 340 are greater than inner/outer radius curvatures R2 and R13 of the second region A2.

Hence, in this embodiment, the notched region (deformed part 340) is formed in the inner corner region and the outer corner with one part of the notched region formed as an inner groove extending from an inner surface of said one of the long side surfaces 121 into an inner surface of the bottom side (123) and another part of the notched region formed as an outer groove extending from an outer surface of one of the long side surfaces 121 to an outer surface of the bottom side 123. In this embodiment, the inner groove extends from the inner surface of the long side surface 121 into the inner surface of the bottom side 123 to a stepped portion in the bottom side 123.

In some embodiments, the thickness of the inner groove in the bottom side 123 is from 65% to 95% of the thickness of the bottom side 123. In some embodiments, the thickness of the inner groove in the bottom side 123 is 80% of the thickness of the bottom side 123.

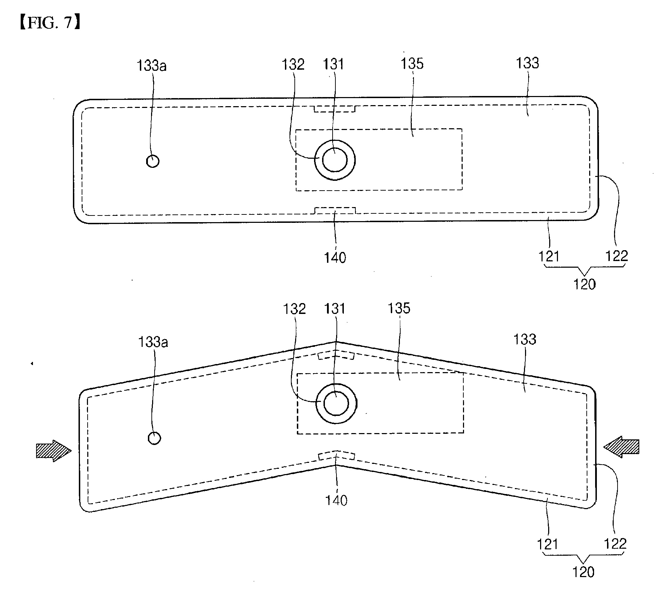

FIG. 7 is a plan view illustrating a state in which the secondary battery shown in FIG. 1 is longitudinally compressed.

Referring to FIG. 7, in the secondary battery 100 according to an embodiment of the present invention, the electrode terminal 131 is electrically connected to the terminal plate 135 and is insulated from the terminal plate 135 by the gasket 132. The cap plate 133 is electrically connected to the can 120. In addition, the terminal plate 135 is spaced apart from the pair of long side surfaces 121 and the pair of short side surfaces 122. That is to say, the electrode terminal 131 and the terminal plate 135 have the same polarity (e.g., a negative polarity), and the cap plate 133 and the can 120 have the opposite polarity (e.g., a positive polarity).

In such a state, if a pressure is applied from each of the pair of short side surfaces 122 to the center of the can 120 to perform a longitudinal compression test, the can 120 is deformed with respect to the deformed part 140 formed on the long side surface 121 as the central axis. Here, the terminal plate 135 is short-circuited with the long side surface 121 of the can 120, so that a discharge of current is rapidly performed, thereby preventing an accident of the secondary battery 100, such as ignition or explosion, due to over-heat of the electrode assembly 110. As described above, since the deformed part 140 allows the can 120 to be deformed in a predetermined direction during a longitudinal compression test, a short-circuit of the electrode assembly 110 can be controlled, thereby improving the safety of the secondary battery 100.

According to embodiments of the invention, there is provided a secondary battery comprising: an electrode assembly; a can arranged to accommodate the electrode assembly, the can including a pair of long side surfaces and a pair of short side surfaces, and a bottom side connecting the pair of long side surfaces and the pair of short side surfaces; a cap assembly coupled to a top portion of the can; and a notched region formed at a corner region where one of the long side surfaces meets the bottom side. In some embodiments, the notched region is formed at a central portion of the corner region.

In some embodiments, the notched region is arranged such that when force is applied to the pair of short side surfaces, the can will deform in a predetermined way.

In some embodiments, the length of the notched region in a direction in a plane parallel to a long side surface 121 is 1% to 35% of the length of the bottom side 123 in a direction in a plane parallel to the long side surface 121. In some embodiments the length of the notched region is 15% of the length of the bottom side 123.

In some embodiments, the secondary battery comprises a pair of notched regions, with one notched region formed at a corner region where one of the long side surfaces meets the bottom side and another notched region formed at a corner region where the other of the long side surfaces meets the bottom side. In some embodiments, the two notched regions are formed to be opposite each other.

While the secondary battery of the invention has been described in confection with a certain exemplary embodiment, it will be understood by those skilled in the art that the invention is not limited to the disclosed embodiment, but rather is intended to cover various modifications included within the scope of the appended claims.

## Claims

1. A secondary battery comprising:
an electrode assembly (110);
a can (120) arranged to accommodate the electrode assembly (110), the can (120) including a pair of long side surfaces and a pair of short side surfaces, and a bottom side connecting the pair of long side surfaces (121) and the pair of short side surfaces (122);
a cap assembly (130) coupled to a top portion of the can (120); and
a notched region (140, 240, 340) formed at a corner region where one of the long side surfaces (121) meets the bottom side (123);
wherein the corner region comprises an inner corner region on an inner surface of the can (120) and an outer corner region on an outer surface of the can (120);
wherein the notched region (240) is formed in the outer corner region,
wherein an outer radius of curvature (R11) of the notched region (240) is greater than an outer radius of curvature (R13) of an other region of the corner portion; the outer radius of curvature (R11) of the notched region (240) is greater than an inner radius of curvature (R12) of the notched region (240); and the outer radius of curvature (R13) of the other region of the corner portion is equal to the inner radius of curvature (R12) of the notched region (240).

2. A secondary battery according to claim 1, wherein the notched region (140, 240, 340) is formed at a central portion of the corner region.

3. A secondary battery according to claim 1 or 2, wherein the notched region (140, 240, 340) is arranged such that when force is applied to the pair of short side surfaces, the can (120) will deform in a predetermined way.

4. A secondary battery according to any one of claims 1 to 3, wherein the notched region (240) is formed as a groove extending from an outer surface of said one of the long side surfaces (121) to an outer surface of the bottom side (123).

5. A secondary battery according to any one of claims 1 to 4, wherein a length of the notched region (140, 240, 340) in a direction in a plane parallel to a said long side surface (121) is 1% to 35% of the length of the bottom side (123) in a direction in a plane parallel to a said long side surface (121), optionally wherein the length of the notched region (140, 240, 340) is 15% of the length of the bottom side (123).

6. A secondary battery according to any one of claims 1 to 5, comprising a pair of said notched regions (140, 240, 340), wherein one said notched region (140, 240, 340) is formed at a corner region where one of the long side surfaces (121) meets the bottom side (123) and another said notched region (140, 240, 340) is formed at a corner region where the other of the long side surfaces (121) meets the bottom side (123).

7. A secondary battery according to claim 6, wherein the two said notched regions (140, 240, 340) are formed to be opposite each other.

## Patentansprüche

1. Sekundärbatterie, umfassend:
einen Elektrodenaufbau (110);
ein Gehäuse (120), das zur Aufnahme des Elektrodenaufbaus (110) eingerichtet ist, wobei das Gehäuse (120) ein Paar von langen Seitenflächen und ein Paar von kurzen Seitenflächen und eine Unterseite, die das Paar von langen Seitenflächen (121) und das Paar von kurzen Seitenflächen (122) verbindet, aufweist;
einen Kappenaufbau (130), der mit einem oberen Abschnitt des Gehäuses (120) gekoppelt ist; und
einen eingekerbten Bereich (140, 240, 340), der in einem Eckenbereich, in dem eine der langen Seitenflächen (121) auf die Unterseite (123) trifft, gebildet ist;
wobei der Eckenbereich einen inneren Eckenbereich an einer Innenfläche des Gehäuses (120) und einen äußeren Eckenbereich an einer Außenfläche des Gehäuses (120) umfasst;
wobei der eingekerbte Bereich (240) in dem äußeren Eckenbereich gebildet ist;
wobei ein äußerer Krümmungsradius (R11) des eingekerbten Bereichs (240) größer als ein äußerer Krümmungsradius (R13) eines anderen Bereichs des Eckenbereichs ist; der äußere Krümmungsradius (R11) des eingekerbten Bereichs (240) größer als ein innerer Krümmungsradius (R12) des eingekerbten Bereichs (240) ist; und der äußere Krümmungsradius (R13) des anderen Bereichs des Eckenbereichs dem inneren Krümmungsradius (R12) des eingekerbten Bereichs (240) gleich ist.

2. Sekundärbatterie nach Anspruch 1, wobei der eingekerbte Bereiche (140, 240, 340) in einem Mittelabschnitt des Eckenbereichs gebildet ist.

3. Sekundärbatterie nach Anspruch 1 oder 2, wobei der eingekerbte Bereich (140, 240, 340) so angeordnet ist, dass sich das Gehäuse (120) auf eine vorherbestimmte Weise verformen wird, wenn eine Kraft auf das Paar von kurzen Seitenflächen ausgeübt wird.

4. Sekundärbatterie nach einem der Ansprüche 1 bis 3, wobei der eingekerbte Bereich (240) als eine Nut gebildet ist, die sich von einer Außenfläche der einen der langen Seitenflächen (121) zu einer Außenfläche der Unterseite (123) erstreckt.

5. Sekundärbatterie nach einem der Ansprüche 1 bis 4, wobei eine Länge des eingekerbten Bereichs (140, 240, 340) in einer Richtung in einer Ebene, die parallel zu einer langen Seitenfläche (121) verläuft, 1 % bis 35 % der Länge der Unterseite (123) in einer Richtung in einer Ebene, die parallel zu einer langen Seitenfläche (121) verläuft, beträgt, wobei optional die Länge des eingekerbten Bereichs (140, 240, 340) 15 % der Länge der Unterseite (123) beträgt.

6. Sekundärbatterie nach einem der Ansprüche 1 bis 5, umfassend ein Paar von eingekerbten Bereichen (140, 240, 340), wobei einer der eingekerbten Bereiche (140, 240, 340) in einem Eckenbereich, in dem eine der langen Seitenflächen (121) auf die Unterseite (123) trifft, gebildet ist, und der andere der eingekerbten Bereiche (140, 240, 340) in einem Eckenbereich, in dem die andere der langen Seitenflächen (121) auf die Unterseite (123) trifft, gebildet ist.

7. Sekundärbatterie nach Anspruch 6 wobei die beiden eingekerbten Bereiche (140, 240, 340) so gebildet sind, dass sie einander gegenüberliegen.

## Revendications

1. Batterie secondaire comprenant :
un ensemble d'électrodes (110) ;
une boîte (120) agencée pour recevoir l'ensemble d'électrodes (110), la boîte (120) comportant une paire de surfaces latérales longues et une paire de surfaces latérales courtes, et un côté inférieur reliant la paire de surfaces latérales longues (121) et la paire de surfaces latérales courtes (122) ;
un ensemble de capuchon (130) couplé à une partie supérieure de la boîte (120) ; et
une zone entaillée (140, 240, 340) formée au niveau d'une zone d'angle où l'une des surfaces latérales longues (121) vient en contact avec le côté inférieur (123) ;
dans laquelle la zone d'angle comprend une zone d'angle intérieur sur une surface intérieure de la boîte (120) et une zone d'angle extérieur sur une surface extérieure de la boîte (120) ;
dans laquelle la zone entaillée (240) est formée dans la zone d'angle extérieur,
dans laquelle un rayon extérieur de courbure (R₁₁) de la zone entaillée (240) est supérieur à un rayon extérieur de courbure (R₁₃) d'une autre zone de la partie d'angle ; le rayon extérieur de courbure (R₁₁) de la zone entaillée (240) est supérieur à un rayon intérieur de courbure (R₁₂) de la zone entaillée (240) ; et le rayon extérieur de courbure (R₁₃) de l'autre zone de la partie d'angle est égal au rayon intérieur de courbure (R₁₂) de la zone entaillée (240).

2. Batterie secondaire selon la revendication 1, dans laquelle la zone entaillée (140, 240, 340) est formée au niveau d'une partie centrale de la zone d'angle.

3. Batterie secondaire selon la revendication 1 ou 2, dans laquelle la zone entaillée (140, 240, 340) est agencée de sorte que lorsqu'une force est appliquée à la paire de surfaces latérales courtes, la boîte (120) se déforme d'une manière prédéterminée.

4. Batterie secondaire selon l'une quelconque des revendications 1 à 3, dans laquelle la zone entaillée (240) est formée en tant que rainure s'étendant d'une surface extérieure de l'une desdites surfaces latérales longues (121) à une surface extérieure du côté inférieur (123).

5. Batterie secondaire selon l'une quelconque des revendications 1 à 4, dans laquelle une longueur de la zone entaillée (140, 240, 340) dans une direction dans un plan parallèle à ladite surface latérale longue (121) est comprise entre 1% et 35% de la longueur du côté inférieur (123) dans une direction dans un plan parallèle à ladite surface latérale longue (121), éventuellement, dans laquelle la longueur de la zone entaillée (140, 240, 340) est de 15% de la longueur du côté inférieur (123).

6. Batterie secondaire selon l'une quelconque des revendications 1 à 5, comprenant une paire desdites zones entaillées (140, 240, 340), dans laquelle l'une desdites zones entaillées (140, 240, 340) est formée au niveau d'une zone d'angle où l'une des surfaces latérales longues (121) vient en contact avec le côté inférieur (123) et une autre desdites zones entaillées (140, 240, 340) est formée au niveau d'une zone d'angle où l'autre des surfaces latérales longues (121) vient en contact avec le côté inférieur (123).

7. Batterie secondaire selon la revendication 6, dans laquelle les deux desdites zones entaillées (140, 240, 340) sont formées pour être opposées l'une à l'autre.
